# EUROPÄISCHE PATENTSCHRIFT

(11) **EP 3 715 665 B1**
(45) Veröffentlichungstag und Bekanntmachung des Hinweises auf die Patenterteilung: **09.02.2022**
(21) Anmeldenummer: 20162829.4
(22) Anmeldetag: 12.03.2020
(51) Int. Cl.: F16D 65/18, F16D 59/02

(54) **ELEKTROMAGNETISCH LÜFTBARE FEDERKRAFTBREMSE UND VERFAHREN ZU DEREN HERSTELLUNG**
ELECTROMAGNETICALLY VENTILATED SPRING BRAKE AND METHOD FOR ITS MANUFACTURE
FREIN À RESSORT POUVANT ÊTRE AÉRÉ DE MANIÈRE ÉLECTROMAGNÉTIQUE ET SON PROCÉDÉ DE FABRICATION

(30) Priorität: 26.03.2019 DE 102019107766
(43) Veröffentlichungstag der Anmeldung: 30.09.2020
(73) Patentinhaber: Kendrion INTORQ GmbH, 31855 Aerzen (DE)
(72) Erfinder: Düning, Jochen, 31855 Aerzen (DE)
(74) Vertreter: Westphal, Mussgnug & Partner Patentanwälte mbB

(56) Entgegenhaltungen:
- EP-A2- 3 043 454
- US-A1- 2002 100 646
- US-A1- 2008 083 590
- DATABASE WPI Week 199832 Thomson Scientific, London, GB; AN 1998-371632 XP002800017, -& JP H10 148228 A (SHINKO ELECTRIC CO LTD) 2. Juni 1998 (1998-06-02)

## Beschreibung

Die Erfindung betrifft eine elektromagnetisch lüftbare Federkraftbremse nach dem Oberbegriff des Anspruchs 1 sowie ein Verfahren zur Herstellung einer solchen Bremse.

Elektromagnetisch lüftbare Federkraftbremsen der in Rede stehenden Art sind z.B. aus JP H 10 148228 A bekannt und finden in einer Vielzahl technischer Einrichtungen Verwendung. Sie sind dazu ausgebildet, mit einer zu bremsenden Welle verdrehsteif verbunden zu werden. Die Bremswirkung wird von der Bremse auf diese Welle übertragen. Typischerweise weist eine Bremse der in Rede stehenden Art ein Bremselement, einen Rotor und ein Bremsgegenelement auf. Das Bremselement ist entlang einer Achse, welche auch die Drehachse des Rotors bildet und im Folgenden verallgemeinernd als die Achse der Bremse bezeichnet wird, verschieblich gelagert. Ein derartiges Bremselement wird üblicherweise als Ankerscheibe bezeichnet. Der Rotor ist dazu ausgebildet, verdrehsteif mit einer abzubremsenden Welle verbunden zu werden, dabei jedoch entlang der Achse der Bremse verschieblich zu sein. Die Bremswirkung wird dadurch erzielt, dass das Bremselement den Rotor gegen das Bremsgegenelement presst. Durch die Reibung, die aufgrund dieses Anpressens zwischen Bremselement und Rotor und/oder Bremsgegenelement und Rotor erzeugt wird, wird das Bremsmoment erzeugt.

Zur Erzeugung der benötigten Anpresskraft ist das Bremselement mit einer Federkraft beaufschlagt. Zum Lüften der Bremse weist diese eine elektromagnetische Einrichtung, insbesondere einen Elektromagneten auf, der in einem Magnetgehäuse angeordnet ist. Typischerweise wird die Federkraft durch ein oder eine Mehrzahl Federelemente erzeugt, wobei sich die Federelemente typischerweise an und/oder in dem Magnetgehäuse abstützen und so eine Druckkraft zwischen Bremselement und dem Magnetgehäuse aufbauen. Diese ist von externer Hilfsenergie unabhängig, so dass Bremsen der in Rede stehenden Art beim Ausfall jeglicher Hilfsenergie schließen ("fail-safe"). Zum Lüften erzeugt die elektromagnetische Einrichtung eine anziehende elektromagnetische Kraft zwischen dem Bremselement und dem Magnetgehäuse, welche der Federkraft entgegenwirkt und diese überwindet. Das Bremselement wird so entlang der Achse der Bremse zum Magnetgehäuse hin gezogen, wobei die Federkraft überwunden und der Bremsrotor entlastet wird. Das Bremsgegenelement und das Magnetgehäuse sind miteinander verbunden, so dass die Druckkräfte, welche die Bremswirkung erzeugen, durch die Verbindung zwischen Bremsgegenelement und Magnetgehäuse aufgenommen werden. In der Verbindung zwischen dem Magnetgehäuse und dem Bremsgegenelement entstehen dabei entsprechende Zugspannungen.

Darüber hinaus werden durch die Erzeugung des Bremsmoments in Umfangsrichtung gerichtete Kräfte, die von dem rotierenden Bremsrotor während des Abbremsvorgangs auf Bremselement und Bremsgegenelement übertragen werden, von der Verbindung zwischen Bremsgegenelement und Magnetgehäuse aufgenommen. Diese Kräfte, ebenso wie die Zugspannungen, sind zudem zeitlich nicht konstant, sondern treten mit den Bremsvorgängen auf, können hierdurch insbesondere auch vergleichsweise "ruckartig" einsetzen. Dies führt dazu, dass die Verbindung zwischen Magnetgehäuse und Bremsgegenelement vergleichsweise hohen Belastungen, die darüber hinaus in gegensätzliche Richtungen wirken können, ausgesetzt ist.

Darüber hinaus kann die Verbindung zwischen dem Bremsgegenelement und dem Magnetgehäuse regelmäßig nur durch Teile erfolgen, die außerhalb des - relativ zu dieser Verbindung rotierenden - Rotors angeordnet sind. Da der Rotordurchmesser entscheidend für die Leistungsfähigkeit einer Federkraftbremse der in Rede stehenden Art ist, soll dieser in der Regel möglichst groß gewählt werden. Für die Verbindung zwischen Bremsgegenelement und Magnetgehäuse bedeutet dies, dass diese - je massiver sie gestaltet wird - den Bauraum, den die Federkraftbremse benötigt, entsprechend erhöht und/oder den möglichen Rotordurchmesser begrenzt.

Schlussendlich besteht an die Verbindung die Anforderung einer gewissen Präzision, da durch diese Verbindung die genaue relative räumliche Lage zwischen Magnetgehäuse und Bremsgegenelement festgelegt wird. Aus diesem Abstand resultiert insbesondere der Luftspalt der Federkraftbremse, d.h., die Verbindung legt die Weglänge, die sich das Bremselement beim Schließen und/oder Lüften der Bremse bewegt, fest.

Die in der Vergangenheit zur Überwindung der vorstehend beschriebenen Schwierigkeiten entwickelten Federkraftbremsen weisen oftmals recht komplexe konstruktive Gestaltungen auf, weshalb die Montage derartiger Bremsen mit einem entsprechenden Aufwand verbunden ist.

Bei der anfangs zitierten JP H 148228 A ist das Magnetgehäuse und das Bremsgegenelement mittels einer Schweißverbindung stoffschlüssig verbunden.

DIE US 2008/0083590 A1 beschreibt eine ähnliche elektromagnetisch betätigbare Federdruckbremse. Dort sind das Magnetgehäuse und das Bremsgegenelement miteinander klemmend verbunden.

Der Erfindung liegt daher die Aufgabe zugrunde, eine Federkraftbremse der in Rede stehenden Art sowie ein Verfahren zur Herstellung einer derartigen Federkraftbremse aufzuzeigen, die eine stabile und präzise Verbindung zwischen Magnetgehäuse und Bremsgegenelement aufweist und dabei nacheine kostengünstige Herstellung der Federkraftbremse ermöglichen.

Die Aufgabe wird gelöst durch eine Federkraftbremse und ein Verfahren zur Herstellung einer Federkraftbremse mit den Merkmalen der unabhängigen Ansprüche 1 und 8. Die Merkmale der abhängigen Ansprüche betreffen vorteilhafte Ausführungsformen.

Die Aufgabe wird dadurch gelöst, dass Bereiche des Bremsgegenelements als Verbindungsbereiche ausgebildet sind, die sich entlang einer zu der Achse der Bremse parallelen Richtung in Richtung des Magnetgehäuses erstrecken und mit in radialer Richtung nach außen weisenden Oberflächenbereichen des Bremsengehäuses stoffschlüssig mittels einer Lötverbindung verbunden sind.

Es hat sich gezeigt, dass eine Lötverbindung zwischen Bremsgegenelements und Bremsengehäuse zu einer Verbindung führt, die die beim Bremsen entstehenden Kräfte im Bereich dieser Verbindung hervorragend übertragen kann. Insbesondere bietet eine Lötverbindung in diesem Bereich der Bremse eine hohe Widerstandsfähigkeit gegen die beim Betrieb derartiger Bremsen oft typischen Belastungswechsel.

Es hat sich gezeigt, dass andere Verbindungselemente, wie beispielsweise Schrauben, die an einer vergleichbaren Position, insbesondere radial ausgerichtet, angeordnet wurden, um derartige Verbindungsbereiche mit dem Magnetgehäuse zu verbinden, nur schwer betriebssicher auszulegen sind. Zudem müssen für derartige Befestigungselemente entsprechende Bohrungen in das Magnetgehäuse vorgenommen werden. Dies ist aufwändig, da die nach außen weisende Fläche zum Anfertigen dieser Bohrung regelmäßig zunächst abgeflacht werden muss, um ein Ansetzen der Bohrwerkzeuge zu ermöglichen. Auch dringen die Verbindungselemente in die Tiefe des Magnetgehäuses ein, wo sie den für andere Bestandteile, insbesondere die elektromagnetische Einrichtung, zur Verfügung stehenden Bauraum im Magnetgehäuse beeinträchtigen.

Des Weiteren ermöglicht es die Lötverbindung, Bremsgegenelement und Magnetgehäuse mit vergleichsweise hoher Präzision relativ zueinander anzuordnen und zu fixieren. Dies liegt insbesondere daran, dass es Lötverfahren ermöglichen, durch die stoffschlüssige Verbindung ein Toleranzausgleich herbei zuführen. Dies gilt insbesondere dann, wenn die Lötverbindung derart ausgeführt wird, dass beim Herstellen der stoffschlüssigen Verbindung ein zusätzlicher Werkstoff in die Lötverbindung eingebracht wird. Bei diesem kann es sich beispielsweise um ein Lot handeln.

Die Lötverbindungkann insbesondere mit einem Verfahren hergestellt sein, welches einen vergleichsweise geringen Wärmeenergieeintrag in das Magnetgehäuse der Bremse mit sich bringt. Dies liegt insbesondere daran, dass Bestandteile der elektromagnetischen Einrichtung zum Lüften der Bremse üblicherweise wärmeempfindlich sind. Dies gilt insbesondere dann, wenn die elektromagnetische Einrichtung eine Spule aufweist, die ein Isolierstoffsystem aufweist, beispielsweise in eine Vergussmasse eingebettet ist. Derartige Isolierstoffsysteme stellen eine vorteilhafte Möglichkeit dar, die Spule und gegebenenfalls andere Bestandteile elektromagnetischer Einrichtungen der in Rede stehenden Art in ein Magnetgehäuse einzubetten. Die Isolierstoffsysteme weisen jedoch eine signifikant geringere Temperaturbeständigkeit auf als insbesondere metallische Bestandteile einer Bremse der in Rede stehenden Art.

Insbesondere handelt es sich jedoch bei der Lötverbindung um eine Hartlötverbindung. Es hat sich gezeigt, dass Lötverbindungen eine hinreichende mechanische Festigkeit für eine Verbindung zwischen einem Bremsgegenelement und einem Magnetgehäuse einer Bremse der in Rede stehenden Art aufweisen können. Darüber hinaus haben Lötverbindungen eine Reihe Vorteilen in Verbindung mit der konkreten Anwendung. So weisen Lötverbindungen typischerweise einen vergleichsweise geringen Wärmeeintrag auf, da das Lot bei niedrigeren Temperaturen schmilzt und verarbeitet wird als beispielsweise ein typischer Schweißzusatz im Falle einer Schweißverbindung. Auch weisen Lötverbindungen den Vorteil auf, dass der Werkstoff der durch die Lötverbindung zu verbindenden Teile in der Regel selbst nicht aufgeschmolzen wird. Vorteilhaft ist dies insbesondere auch im Hinblick auf die Vermeidung von thermischem Verzug und/oder Gefügeschädigungen.

Darüber hinaus ist das Lot gut geeignet, um Fertigungstoleranzen auszugleichen. Dies gilt insbesondere für die Abstände zwischen den Verbindungsbereichen und der mit den Verbindungsbereichen zu verbindenden Oberfläche des Magnetgehäuses, die durch das die stoffschlüssige Verbindung zwischen Magnetgehäuse und Bremsgegenelement bildende Lot "überbrückt" werden kann. Auch werden für die Ausbildung einer Lötverbindung keine planen Flächen am Magnetgehäuse benötigt. Dadurch kann das Magnetgehäuse als Drehteil ausgeführt sein. Die gekrümmte Oberfläche des Magnetteils lässt sich dann direkt mit einer planen Oberfläche eines Verbindungsbereichs mittels einer stoffschlüssigen Lötverbindung verbinden.

Bei der Lötverbindung kann es sich um eine Metall-Inertgas-Lötverbindung (MIG-Lötverbindung) handeln. Beim MIG-Löten handelt es sich um ein Lötverfahren, bei dem - ähnlich wie beim MIG-Schweißen - ein Lichtbogen zwischen einer Elektrode und dem zu verlötenden Werkstück erzeugt wird. Dabei kommt insbesondere ein gepulster Stromfluss zum Einsatz. Das Lot wird über die Elektrode zugeführt, die - ähnlich wie beim MIG-Schweißen - tropfenweise abschmilzt. Ähnlich wie beim MIG-Schweißen wird die Elektrode mit einem Schutzgas umspült. Als Schutzgas kann beispielsweise Argon verwendet werden.

Insbesondere vorteilhaft ist Löten, insbesondere das MIG-Löten, wenn es sich bei den Verbindungsbereichen des Bremsgegenelements und/oder dem Magnetgehäuse um verzinkte Metallteile handelt. Beim Löten, insbesondere beim MIG-Löten können insbesondere Kupfer-Silikat-Lote zum Einsatz kommen. Diese verhalten sich zinkaffin. Der Vorteil bei der Verwendung der Kupfer-Silikat-Lote ist zudem, dass das Material der entstehenden stoffschlüssigen Verbindung duktil ist und damit insbesondere die wechselnden Belastungen, wie sie beim Betrieb einer Bremse der in Rede stehenden Art typischerweise auftreten können, besonders gut aufnehmen können. Darüber hinaus ist das Material korrosionsbeständig.

Generell gilt für verzinkte Oberflächen von Bremsgegenelement und/oder Magnetgehäuse, dass diese sich durch Lötverfahren wesentlich besser fügen lassen als durch Schweißverfahren. Dies liegt insbesondere daran, dass sich aufgrund der niedrigeren Prozesstemperatur bei Lötverfahren die niedrige Verdampfungstemperatur des Zinks weniger negativ auswirkt, insbesondere im Hinblick auf die Bildung von Spritzern. Derartige, bei Schweißverfahren häufig übliche Spritzer fallen bei der Verwendung eines Lötverfahrens grundsätzlich wesentlich seltener an. Auch ist der Verzug bei Lötverfahren geringer, es kommt nicht zu den für Schweißverfahren oft typischen Aufhärtungen am Rand der Schweißnaht und die Lötverfahren eignen sich insbesondere auch gut für die Verbindung flächiger Bauteile mit geringen Dicken, was insbesondere die Verwendung vergleichsweise dünner Verbindungsbereiche ermöglicht.

Während des Verbindens der Verbindungsbereiche mit dem Magnetgehäuse mittels des Lötens, insbesondere mittels des MIG-Lötens, kann in vorteilhafter Weise der Lötstrom für Zwecke der Prozesskontrolle überwacht werden. Auf diese Weise kann eine einfache Qualitätskontrolle der hergestellten Verbindung erfolgen.

Die Verbindungsbereiche können Öffnungen aufweisen. Die Öffnungen können insbesondere dazu dienen, während das Herstellens der stoffschlüssigen Verbindung einen Materialzusatz, insbesondere ein Lot, aufzunehmen. In diesem Zusammenhang können die Öffnungen nach Art von Schweißaugen und/oder Lötaugen gestaltet sein. Es hat sich als besonders vorteilhaft erwiesen, wenn die Öffnungen eine tropfenförmige Kontur aufweisen. Diese eignet sich insbesondere gut für die Durchführung eines Lötverfahrens, darüber hinaus führt die Tropfenform zu einer Geometrie der stoffschlüssigen Verbindung, die besonders vorteilhaft im Hinblick auf die Übertragung der Kräfte ist.

Das Bremsgegenelement kann ein Blechteil aufweisen. Unter einem Blechteil ist ein Teil zu verstehen, welches aus einem Blech hergestellt ist. Hierbei ist es möglich, dass das Bremsgegenelement aus diesem Blechteil besteht. Es ist jedoch alternativ auch möglich, dass das Bremsgegenelement weitere Bestandteile aufweist. Dies kann insbesondere ein Reibbelag sein, der an dem Blechteil angeordnet ist. Besteht das Bremsgegenelement aus dem Blechteil, so kann eine Oberfläche des Blechteils als Reibfläche dienen, an die der Rotor zur Erzeugung der Bremskraft angepresst wird.

Die Verbindungsbereiche können insbesondere aus dem Blechteil gebildet sein. Dabei handelt es sich insbesondere um in Richtung des Magnetgehäuses abgebogene Bereiche des Blechteils. Die Verbindungsbereiche können insbesondere zungenförmig gestaltet sein und sich entlang einer zur Achse der Bremse parallelen Richtung in Richtung des Magnetgehäuses erstrecken. Mit anderen Worten kann es sich bei den Verbindungsbereichen um in Richtung des Magnetgehäuses abgebogene Blechzungen des Blechteils handeln. Hierbei umgreifen die Verbindungsbereiche insbesondere Rotor und Bremselement.

Das Bremsgegenelement kann eine, insbesondere mittig angeordnete, Öffnung aufweisen. Diese Öffnung kann insbesondere kreisförmig gestaltet sein. Entsprechend kann das Bremsgegenelement, insbesondere das Blechteil, einen kreisringförmigen Bereich aufweisen. Der kreisringförmige Bereich ist insbesondere rechtwinklig zur Achse der Bremse orientiert. Der kreisringförmige Bereich des Bremsgegenelements, insbesondere des Blechteils, kann insbesondere eine Reibfläche des Bremsgegenelements bereitstellen, an die der Rotor zur Erzeugung der Bremskraft angedrückt wird. Alternativ kann der kreisringförmige Bereich eine Fläche bereitstellen, an der ein Reibbelag zum Bereitstellen der Reibfläche angeordnet wird.

Das Bremsgegenelement, insbesondere das Blechteil, kann eine Profilierung zur Erhöhung der Steifigkeit des Bremsgegenelements aufweisen. Bei der Profilierung kann es sich insbesondere um eine Versteifungssicke handeln. Diese kann insbesondere an einem inneren Rand des kreisringförmigen Bereichs des Bremsgegenelements, insbesondere des Blechteils, und/oder im Bereich des äußeren Rands der Öffnung im Bremsgegenelement angeordnet sein. Bei der Sicke kann es sich insbesondere um eine Abbiegung des inneren Rands des kreisringförmigen Bereichs in Richtung einer zur Achse der Bremse parallelen Richtung handeln.

Die Verbindungsbereiche können eine Führung für die Bewegung des Bremselements in zur Achse der Bremse paralleler Richtung bilden. In diesem Zusammenhang können insbesondere die Schmalseiten der Verbindungsbereiche als Führungsflächen ausgebildet sein. Diese Schmalseiten sind im Wesentlichen in Umfangsrichtung orientiert. Sind die Verbindungsbereiche flächig gestaltet, so sind diese in ihrer Breitenrichtung tangential zum Umfang der Bremse orientiert. Die Führungsflächen erstrecken sich dann insbesondere rechtwinklig zur Breitenrichtung der Verbindungsbereiche. Hieraus resultiert bei einer im Verhältnis zum Durchmesser der Bremse geringen Breite der Verbindungsbereiche, dass die Führungsflächen im Wesentlichen senkrecht zur Umfangsrichtung der Bremse orientiert sind.

Die Verbindungsbereiche können insbesondere eine Abstützung für das Bremselement in Umfangsrichtung bilden. Dadurch ist es möglich, dass beim Anpressen des Bremselements an den Rotor aufgrund der Bremswirkung in das Bremselement eingeleitete Moment in die Verbindungsbereiche und über diese insbesondere in das Magnetgehäuse einzuleiten. Mit anderen Worten kann sich das Bremselement zur Erzeugung der Bremswirkung an den Verbindungsbereichen in Umfangsrichtung abstützen. Die Abstützung des Bremselements erfolgt dabei insbesondere an den vorstehend beschriebenen Führungsflächen.

Das Bremselement kann hierfür zu den Führungsflächen komplementäre Führungselemente aufweisen. Diese können insbesondere ebenfalls in Umfangsrichtung orientierte Anlageflächen zur Anlage an den Führungsflächen bereitstellen. Bei den Führungselementen kann es sich um Vorsprünge handeln, die in radialer Richtung aus der ansonsten kreisförmigen Außenkontur des Bremselements hervortreten. Alternativ und/oder ergänzend ist denkbar, dass in der ansonsten kreisrunden Außenkontur des Bremselements Vertiefungen vorgesehen sind, welche die Anlageflächen ausbilden. Diese Vertiefungen können insbesondere U-förmig und/oder nach Art eines Maulschlüssels gestaltet sein.

In diesem Zusammenhang kann die Federkraftbremse insbesondere vier als Führung ausgebildete Verbindungsbereiche aufweisen. Es hat sich gezeigt, dass mit vier als Führungen ausgebildeten Verbindungsbereichen eine sichere Führung des Bremselements gewährleistet werden kann. Hierbei sind die Führungen insbesondere in einem Winkel von 90° versetzt zueinander angeordnet. Die im Wesentlichen in Umfangsrichtung orientierten Führungsflächen und die jeweils zugeordneten Anlageflächen bewirken dann eine sichere Ausrichtung des Bremselements relativ zur Achse der Bremse und/oder zu den übrigen Bestandteilen der Bremse, insbesondere dem Magnetgehäuse, dem Bremsgegenelement und dem Bremsrotor.

In diesem Zusammenhang hat es sich als vorteilhaft herausgestellt, wenn die Führungen, die durch zwei gegenüberliegend angeordnete Verbindungsbereiche gebildet werden, enger toleriert sind als bei den übrigen Verbindungsbereichen.

Beispielsweise kann die Tolerierung, insbesondere der enger tolerierten Führungen, derart bemessen sein, dass das in Umfangsrichtung der Führung entstehende Spiel eine Drehung des Bremselements relativ zu dem Verbindungsbereich um die Bremsachse von wenigstens 0,1°, insbesondere wenigstens 0,2°, und/oder höchstens 1°, insbesondere höchstens 0,5°, zulässt.

Die Tolerierung weiter tolerierter Führungen kann derart bemessen sein, dass das in Umfangsrichtung der Führung entstehende Spiel eine Drehung des Bremselements relativ zu dem Verbindungsbereich um die Bremsachse von wenigstens 0,2°, insbesondere wenigstens 0,5°, und/oder höchstens 1,5°, insbesondere höchstens 1°, zulässt.

Beispielsweise kann die Tolerierung, insbesondere der enger tolerierten Führungen, derart bemessen sein, dass der maximale zwischen Anlagefläche und Führungsfläche mögliche Abstand, der sich durch ein Verschieben des Bremselements relativ zu den Verbindungsbereichen in zur Achse der Bremse rechtwinkliger Richtung erzeugen lässt, wenigstens 0,1mm, insbesondere wenigstens 0,2mm, und/oder höchstens 0,6mm, insbesondere höchstens 0,3mm, beträgt.

Die Tolerierung weiter tolerierter Führungen kann derart bemessen sein, dass das der maximale zwischen Anlagefläche und Führungsfläche mögliche Abstand, der sich durch ein Verschieben des Bremselements relativ zu den Verbindungsbereichen in zur Achse der Bremse rechtwinkliger Richtung erzeugen lässt, wenigstens 0,2mm, insbesondere wenigstens 0,4mm, und/oder höchstens 1,0mm, insbesondere höchstens 0,6mm, beträgt.

Das Verfahren zur Herstellung der Federkraftbremse sieht vor, dass das Bremselement und der Rotor zwischen dem Bremsgegenelement und dem Magnetgehäuse angeordnet werden, wobei das Bremsgegenelement relativ zum Magnetgehäuse in seiner bestimmungsgemäßen Position positioniert wird, woraufhin die Bereiche des Bremsgegenelements, die als Verbindungsbereiche ausgebildet sind und sich entlang einer zu der Achse der Bremse parallelen Richtung in Richtung des Magnetgehäuses erstrecken, mit in radialer Richtung nach außen weisenden Oberflächenbereichen des Bremsengehäuses stoffschlüssig verbunden werden. Auf diese Weise lässt sich die Federkraftbremse vergleichsweise einfach und vor allem zuverlässig fertigen. Insbesondere kann durch das relative Positionieren von Bremsgegenelement und Magnetgehäuse zueinander und durch die anschließende Lötverbindung die korrekte Positionierung wesentlicher Teile relativ zueinander während des Herstellens der Lötverbindung(en) zuverlässig festgelegt werden. Dies bedeutet insbesondere auch, dass Toleranzen der Bauteile ausgeglichen werden können. Dies betrifft insbesondere die Einstellung des Luftspalts. Die Weite des Luftspalts kann beim relativen Positionieren des Bremsgegenelements zum Magnetgehäuse eingestellt und durch das Herstellen der Lötverbindung auf die eingestellte Weite fixiert werden. Es ist möglich, dass beim Positionieren des Bremsgegenelements relativ zum Magnetgehäuse die Einstellung des Luftspalts der Bremse erfolgt. Diese ist insbesondere manipulationssicher (aufgrund der Lötverbindung). Der Einsatz von Lötverfahren zur Herstellung der stoffschlüssigen Verbindung ist in diesem Zusammenhang vorteilhaft, da durch den vergleichsweise geringen Wärmeeintrag auch nur eine entsprechend geringe Wärmedehnung berücksichtigt werden muss.

Weitere praktische Ausführungsformen und Vorteile der Erfindung sind nachfolgend im Zusammenhang mit den Zeichnungen beschrieben. Es zeigen:

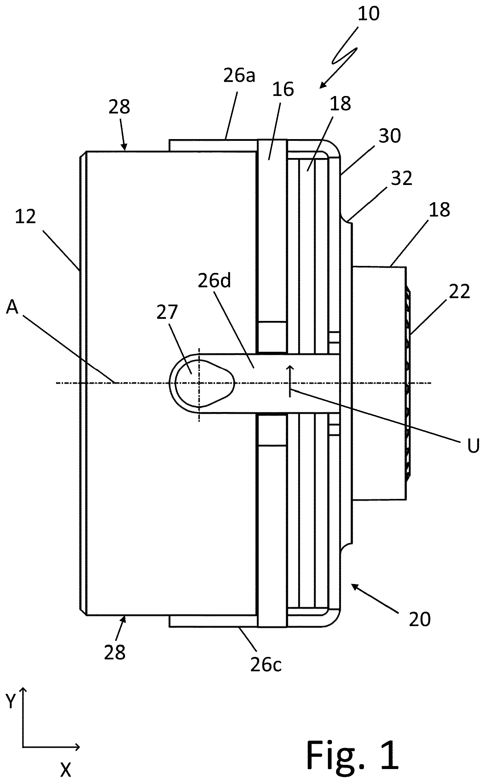

- Fig. 1: eine schematische Darstellung einer Seitenansicht einer beispiel-haften Federkraftbremse,
- Fig. 2: eine schematische Schnittdarstellung der beispielhaften Feder-kraftbremse aus Figur 1 entlang der Schnittebene S,

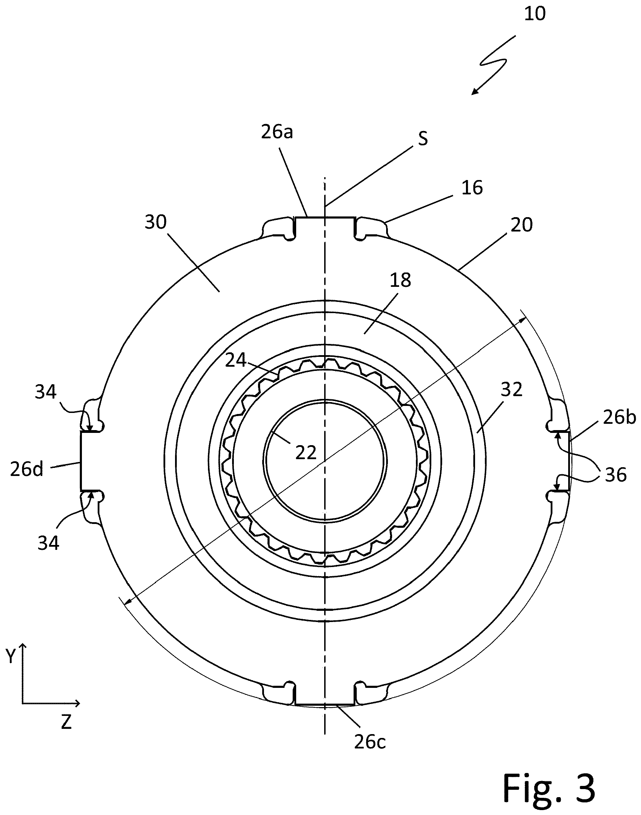

- Fig. 3: eine schematische Darstellung einer Ansicht der beispielhaften Federkraftbremse aus den Figuren 1 und 2 entlang der Bremsachse.

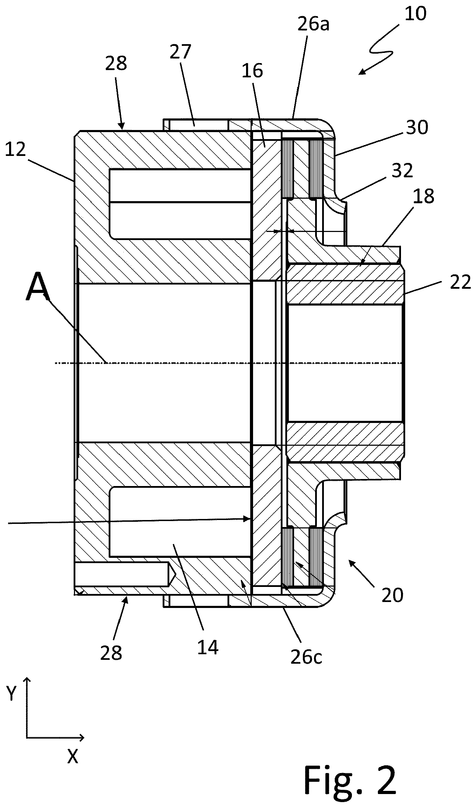

Die Federkraftbremse 10 weist im gezeigten Beispiel ein Magnetgehäuse 12 auf. Dieses kann als Drehteil ausgeführt sein. Das Magnetgehäuse 12 kann einen Aufnahmebereich 14 zur Aufnahme einer elektromagnetischen Einrichtung zum Lüften der Federkraftbremse 10 aufweisen. Insbesondere wenn das Magnetgehäuse 12 - wie dargestellt - als Drehteil gestaltet ist, kann der Aufnahmebereich 14 ringförmig gestaltet sein. Die elektromagneti sehe Einrichtung selbst ist in der Figur 2 aus Gründen der grafischen Vereinfachung nicht dargestellt.

Die Federkraftbremse 10 weist weiterhin ein Bremselement 16, einen Rotor 18 und ein Bremsgegenelement 20 auf. Der Rotor 18 ist dazu ausgebildet, mit einer abzubremsenden - nicht dargestellten - Welle verdrehsteif verbunden zu werden. Relativ zu Magnetgehäuse 12, Bremselement 16 und Bremsgegenelement 20 ist der Rotor 18 um die Achse A der Bremse rotierbar. Der Rotor 18 kann - wie im gezeigten Beispiel - eine Nabe 22 aufweisen, mit der er verdrehsteif um die Achse A und verschieblich entlang einer zur Achse A parallelen Richtung X verbunden ist. Die Verbindung kann - wie im dargestellten Beispiel - durch eine Verzahnung 24 realisiert sein.

Das Bremselement 16 ist durch eine Federkraft beaufschlagt, die das Bremselement 16 zum Schließen der Bremse an den Rotor 18 und damit den Rotor 18 an das Bremsgegenelement 20 anpresst. Die Federkraft kann durch - nicht dargestellte - Federelemente erzeugt sein.

Das Bremsgegenelement 20 weist als Verbindungsbereiche 26 ausgebildete Bereiche auf, die sich entlang einer zur Achse A parallelen Richtung X in Richtung des Magnetgehäuses 12 erstrecken und mit dem Magnetgehäuse 12stoffschlüssig verbunden sind. Die Verbindungsbereiche 26 können insbesondere wie dargestellt in Richtung des Magnetgehäuses 12 umgebogene Blechzungen sein. Die Verbindung mit dem Magnetgehäuse 12 erfolgt dabei im Bereich radial nach außen weisender Oberflächenbereiche 28 des Magnetgehäuses 12. Bei den Oberflächenbereichen kann es sich um Teile einer, zumindest im Wesentlichen, kreiszylindrischen, in radial nach außen weisenden Oberfläche 28 des Magnetgehäuses 12 handeln. Die Verbindungsbereiche können wie im dargestellten Beispiel Öffnungen 27 aufweisen, die nach Art von Lötaugen gestaltet sind. Im dargestellten Beispiel ist der Materialzusatz der stoffschlüssigen Verbindung zeichnerisch nicht dargestellt.

Das Bremsgegenelement 20 ist insbesondere als Blechteil ausgeführt und weist insbesondere einen kreiszylindrischen Bereich 30 auf, an den sich die Verbindungsbereiche 26 anschließen. Im Zentrum des kreiszylindrischen Bereichs 30 weist das Bremsgegenelement 20 insbesondere eine Öffnung auf. Der innere Rand des kreiszylindrischen Bereichs 30 kann wie dargestellt eine Versteifungssicke 32 in Gestalt einer Umbiegung des inneren Rands des kreisringförmigen Bereichs 30 des Bremsgegenelements 20 aufweisen.

Die Verbindungsbereiche 26 können wie im gezeigten Beispiel Führungen für die Bewegungen des Bremselements 16 bilden. Im gezeigten Beispiel kann sich das Bremselement 16 zudem in Umfangsrichtung U an den Verbindungsbereichen 26 abstützen. Diese weisen daher an ihren Schmalseiten im Wesentlichen rechtwinklig zur Umfangsrichtung U orientierte Führungsflächen 34 auf. An dem Bremselement 16 sind Anlageflächen 36 ausgebildet, mit denen sich das Bremselement 16 in Umfangsrichtung U an den Führungsflächen 34 der Verbindungsbereiche 26 abstützen kann.

Da die Bremse im gezeigten Beispiel insbesondere vier Verbindungsbereiche 26a, 26b, 26c und 26d aufweist, ist das Bremselement 16 in der zur Achse A der Federkraftbremse 10 rechtwinkligen Ebene definiert positioniert. So kann wie im gezeigten Beispiel entlang einer ersten, zur Achse A senkrechten Richtung Y die Position des Bremsgegenelements 20 durch die Führungen definiert sein, die durch die einander gegenüberliegenden Verbindungsbereiche 26b und 26d gebildet werden. In einer zweiten, zur Achse A senkrechten Richtung Z, die darüber hinaus zur Richtung Y senkrecht ist, wird die Position des Bremselements 16 durch die einander gegenüberliegenden Führungen festgelegt, die durch die einander gegenüberliegenden Verbindungsbereiche 26a und 26c gebildet werden.

Bei der Herstellung einer Federkraftbremse der dargestellten Art kann insbesondere eine definierte Einstellung des Luftspalts während der Erzeugung der stoffschlüssigen Verbindung erfolgen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Federkraftbremse
- 12: Magnetgehäuse
- 14: Aufnahmebereich
- 16: Bremselement
- 18: Rotor
- 20: Bremsgegenelement
- 22: Nabe
- 24: Verzahnung
- 26: Verbindungsbereiche
- 27: Öffnung
- 28: Nach außen weisende Oberfläche
- 30: kreiszylindrischer Bereich
- 32: Versteifungssicke
- 32: Führungsflächen
- 34: Anlageflächen
- 36: Luftspalt
- a, b, c, d: Indices
- A: Achse
- U: Umfangsrichtung
- X: Richtung
- Y: erste zur Achse senkrechte Richtung
- Z: zweite zur Achse senkrechte Richtung
- S: Schnittebene

## Patentansprüche

1. Elektromagnetisch lüftbare Federkraftbremse (10) mit einem Magnetgehäuse (12), einem Bremselement (16), einem Rotor (18) und einem Bremsgegenelement (20), wobei der Rotor (18) dazu ausgebildet ist, mit einer zu bremsenden Welle verdrehsteif verbunden zu werden, wobei das Bremselement (16) mit einer Federkraft beaufschlagt und dazu ausgebildet ist, aufgrund dieser Federkraft den Rotor (18) zur Erzeugung der Bremswirkung entlang einer zu einer Achse (A) der Bremse parallelen Richtung (X) an das Bremsgegenelement (20) zu pressen, wobei in dem Magnetgehäuse (12) eine elektromagnetische Einrichtung zum Lüften der Bremse angeordnet ist, wobei Bereiche des Bremsgegenelements (20) als Verbindungsbereiche (26) ausgebildet sind, die sich entlang einer zu der Achse (A) der Bremse parallelen Richtung (X) in Richtung des Magnetgehäuses (12) erstrecken , **dadurch gekennzeichnet, dass** die Verbindungsbereiche (26) mit in radialer Richtung nach außen weisenden Oberflächenbereichen (28) des Magnetgehäuses (12) stoffschlüssig mittels einer Lötverbindung verbunden sind.

2. Federkraftbremse (10) nach Anspruch 1, **dadurch gekennzeichnet, dass** es sich bei der Lötverbindung um eine MIG-Lötverbindung handelt.

3. Federkraftbremse (10) nach Anspruch 1 oder 2, **dadurch gekennzeichnet, dass** es sich bei der Lötverbindung um eine Lötverbindung mit einem Kupfer-Silikat-Lot handelt.

4. Federkraftbremse (10) nach einem der vorigen Ansprüche, **dadurch gekennzeichnet, dass** das Bremsgegenelement (20) ein Blechteil aufweist, insbesondere aus einem Blechteil besteht.

5. Federkraftbremse (10) nach Anspruch 4, **dadurch gekennzeichnet**, es sich bei den Verbindungsbereichen (26) um in Richtung des Magnetgehäuses (12) abgebogene Blechzungen des Blechteils handelt.

6. Federkraftbremse (10) nach einem der vorigen Ansprüche, **dadurch gekennzeichnet, dass** die Verbindungsbereiche (26) Führungen für die Bewegung des Bremselements (16) bilden.

7. Federkraftbremse (10) nach Anspruch 6, **dadurch gekennzeichnet, dass** die Führungen für das Bremselement (16), die durch die Verbindungsbereiche (26) gebildet werden, bei zwei gegenüberliegend angeordneten Verbindungsbereichen (26) enger toleriert sind als bei den übrigen Verbindungsbereichen (26).

8. Verfahren zur Herstellung einer elektromagnetisch lüftbaren Federkraftbremse (10) nach einem der vorigen Ansprüche, wobei die Federkraftbremse (10) ein Magnetgehäuse (12), ein Bremselement (16), einen Rotor (18) und ein Bremsgegenelement (20) aufweist, wobei der Rotor (18) dazu ausgebildet ist, mit einer zu bremsenden Welle verdrehsteif verbunden zu werden, wobei das Bremselement (16) mit einer Federkraft beaufschlagt und dazu ausgebildet ist, aufgrund dieser Federkraft den Rotor (18) zur Erzeugung der Bremswirkung entlang einer zu einer Achse (A) der Bremse parallelen Richtung (X) an das Bremsgegenelement (20) zu pressen, wobei in dem Magnetgehäuse (12) eine elektromagnetische Einrichtung zum Lüften der Bremse angeordnet ist, wobei das Bremselement (16) und der Rotor (18) zwischen dem Bremsgegenelement (20) und dem Magnetgehäuse (12) angeordnet werden, wobei das Bremsgegenelement (20) relativ zum Magnetgehäuse (12) in seiner bestimmungsgemäßen Position positioniert wird, woraufhin Bereiche des Bremsgegenelements (20), die als Verbindungsbereiche (26) ausgebildet sind und sich entlang einer zu der Achse (A) der Bremse parallelen Richtung (X) in Richtung des Magnetgehäuses (12) erstrecken, mit in radialer Richtung nach außen weisenden Oberflächenbereichen (28) des Magnetgehäuses (12) stoffschlüssig mittels einer Lötverbindung verbunden werden.

9. Verfahren nach Anspruch 8, **dadurch gekennzeichnet, dass** beim Positionieren des Bremsgegenelements (20) relativ zum Magnetgehäuse (12) die Einstellung des Luftspalts der Bremse erfolgt.

## Claims

1. Electromagnetically releasable spring-loaded brake (10) with a magnet housing (12), a braking element (16), a rotor (18) and a braking counter element (20), wherein the rotor (18) is configured to be non-rotatably connected to a shaft to be braked, wherein the braking element (16) is biased with a spring force and is configured, due to this spring force, to press the rotor (18) against the braking counter element (20) in order to generate a braking effect along a direction (X) which is parallel to an axis (A) of the brake, wherein an electromagnetic device for releasing the brake is arranged in the magnet housing (12), wherein regions of the braking counter element (20) are implemented as connection regions (26) which extend along a direction (X), which is parallel to the axis (A) of the brake, in the direction of the magnet housing (12), **characterized in that** the connection regions (26) are integrally connected to surface regions (28) of the magnet housing (12) which face outwards in a radial direction by means of a solder connection.

2. Spring-loaded brake (10) in accordance with claim 1,
**characterized in that** the solder connection is an MIG solder connection.

3. Spring-loaded brake (10) in accordance with claim 1 or 2,
**characterized in that** the solder connection is a connection with a copper-silicate solder.

4. Spring-loaded brake (10) in accordance with any of the preceding claims, **characterized in that** the braking counter element (20) comprises a sheet metal part, in particular, is composed of sheet metal.

5. Spring-loaded brake (10) in accordance with claim 4,
**characterized in that** the connection regions (26) are metal tongues bent in the direction of the magnet housing (12).

6. Spring-loaded brake (10) in accordance with any of the preceding claims, **characterized in that** the connection regions (26) form guides for the movement of the braking element (16).

7. Spring-loaded brake (10) in accordance with claim 6,
**characterized in that** the guides for the braking element (16) which are formed by the connection regions (26) lie within tighter limits in the case of two oppositely disposed connection regions (26) than in the case of the remaining connection regions (26).

8. Method for the manufacture of an electromagnetically releasable spring-loaded brake (10) in accordance with any of the preceding claims, wherein the spring-loaded brake (10) comprises a magnet housing (12), a braking element (16), a rotor (18) and a braking counter element (20), wherein the rotor (18) is configured to be non-rotatably connected to a braking shaft, wherein the braking element (16) is biased with a spring force and is configured, due to this spring force, to press the rotor (18) against the braking counter element (20) in order to generate a braking effect along a direction (X) which is parallel to an axis (A) of the brake, wherein an electromagnetic device for releasing the brake is arranged in the magnet housing (12), wherein
the braking element (16) and the rotor (18) are arranged between the braking counter element (20) and the magnet housing (12), wherein the braking counter element (20) is positioned in its intended position relative to the magnet housing (12), upon which regions of the braking counter element which are implemented as connection regions (26) and which extend along a direction parallel to the axis (A) of the brake, in the direction of the magnet housing (12), are integrally connected to surface regions (28) of the magnet housing (12) facing outwards in a radial direction by means of a solder connection.

9. Method in accordance with claim 8,
**characterized in that** the adjustment of the air gap is carried out when the braking counter element (20) is positioned relative to the magnet housing (12).

## Revendications

1. Frein à ressort à ventilation électromagnétique (10) comprenant un boîtier d'aimant (12), un élément de frein (16), un rotor (18) et un élément complémentaire de frein (20),
- le rotor (18) étant réalisé pour être relié de manière solidaire en rotation avec un arbre à freiner, et
- l'élément de frein (16) est sollicité par une force de ressort et il est réalisé de façon qu'avec cette force de ressort il puisse pousser le rotor (18) contre l'élément complémentaire de frein (20) pour créer un effet de freinage le long d'une direction (X) parallèle à l'axe (A) du frein,
- le boîtier d'aimant (12) comporte une installation électromagnétique pour ventiler le frein,
- les zones de l'élément complémentaire de frein (20) sont réalisées comme zones de liaison (26) qui s'étendent le long d'une direction (X) parallèle à l'axe (A) du frein dans la direction du boîtier d'aimant (12), frein **caractérisé en ce que**
les zones de liaison (26) sont reliées par des zones de surface supérieure (28) orientées vers l'extérieur dans la direction radiale du boîtier d'aimant (12), par une liaison par la matière réalisée par une brasure.

2. Frein à force de ressort (10) selon la revendication 1,
**caractérisé en ce que**
la liaison par brasure est une liaison par brasure MIG.

3. Frein à force de ressort (10) selon la revendication 1 ou 2, **caractérisé en ce que**
la liaison par brasure est une liaison par brasure avec une brasure de silicate de cuivre.

4. Frein à force de ressort (10) selon l'une des revendications précédentes,
**caractérisée en ce que**
l'élément complémentaire de frein (20) comporte une pièce en tôle et cet élément est notamment réalisé comme pièce à tôle.

5. Frein à force de ressort (10) selon la revendication 4,
**caractérisé en ce que**
les zones de liaison (26) sont des languettes de tôle de la pièce en tôle recourbées en direction du boîtier d'aimant (12).

6. Frein à force de ressort (10) selon l'une des revendications précédentes,
**caractérisée en ce que**
les zones de liaison (26) forment des guides pour le mouvement de l'élément de frein (16).

7. Frein à force de ressort (10) selon la revendication 6,
**caractérisée en ce que**
les guides de l'élément de frein (16) formés par les zones de liaison (26) ont, pour deux zones de liaison (26) opposées, des tolérances plus réduites que pour les autres zones de liaison (26).

8. Procédé de réalisation d'un frein à force de ressort à ventilation électromagnétique (10) selon l'une des revendications précédentes,
- le frein à force de ressort (10) comprenant un boîtier d'aimant (12), un élément de frein (16), un rotor (18) et un élément complémentaire de frein (20),
- le rotor (18) étant réalisé pour être relié de manière solidaire en rotation à un arbre à freiner,
- l'élément de frein (16) étant sollicité par une force de ressort et il est réalisé pour qu'avec cette force de ressort il puisse pousser le rotor (18) contre l'élément complémentaire de frein (20) pour générer un effet de freinage le long d'une direction (X) parallèle à l'axe (A) du frein,
- le boîtier d'aimant (12) comportant une installation électromagnétique pour ventiler le frein,
- l'élément de frein (16) et le rotor (18) étant installés entre l'élément complémentaire de frein (20) et le boîtier d'aimant (12),
- l'élément complémentaire de frein (20) étant positionné par rapport au boîtier d'aimant (12) dans une position déterminée et ainsi des zones de l'élément complémentaire de frein (20) réalisées sous la forme de zones de liaison (26) s'étendent le long d'une direction parallèle à l'axe (A) du frein en direction du boîtier d'aimant (12) avec des zones de surface supérieure (28) du boîtier d'aimant (12) orientées vers l'extérieur dans la direction radiale (X), qui sont reliées par une liaison par la matière par une brasure.

9. Procédé selon la revendication 8,
**caractérisé en ce que**
le positionnement de l'élément complémentaire de frein (20) par rapport au boîtier d'aimant (12) règle l'entrefer du frein.
